# EUROPEAN PATENT APPLICATION

(11) **EP 4 764 596 A1**
(43) Date of publication of application: **24.06.2026**
(21) Application number: 24221551.5
(22) Date of filing: 19.12.2024
(51) Int. Cl.: G01S 7/40, G01S 13/34, G01S 13/87, G01S 13/931

(54) **CASCADED RADAR SYSTEM AND METHOD OF SYNCHRONIZATION USING LOCAL OSCILLATOR SIGNAL**

(71) Applicant: NXP B.V., 5656 AG Eindhoven (NL)
(72) Inventor: van Meurs, Lars, 5656AG Eindhoven (NL); Uke, Anil, 5656AG Eindhoven (NL)
(74) Representative: Schwarzweller, Thomas

(57) **Abstract**

The present disclosure relates to a radar system and related method, where the radar system includes radar front-end circuitry having a leader device and a follower device. The leader device includes first processing circuitry configured to output, at a first time, an initial LO signal via a first LO interface perform a first calibration process, including calibration of first TX/RX circuitry, based on a first calibration schedule and based on the first time. The follower device includes a second processing circuitry configured to determine the first time at which the first LO signal is output by the leader device and perform a second calibration process, including calibration of second TX/RX circuitry, based on a second calibration schedule and based on the first time.

## Description

### TECHNICAL FIELD

Embodiments of the subject matter described herein relate generally to radar systems, such as automotive radar systems, including techniques for calibration and synchronization of such systems.

### BACKGROUND

Automotive radar solutions for advanced driver assistance systems (ADAS) are currently being deployed on a large scale, and are typically implemented as long-range radar (LRR) applications or short-range radar (SRR) applications. Both of these applications typically use frequency modulated continuous wave (FMCW) modulation techniques in order to be able to identify objects in the vicinity of the radar system, such as a vehicle or a pedestrian. Such radar systems typically utilize millimeter wave (mmWave) frequencies for transmission and reception or radar signals. Automotive radar systems may be implemented as cascaded radar systems having distributed radar devices, which may include a leader and one or more followers. The leader may supply clock and local oscillator (LO) signals to the followers to achieve synchronization and coherency.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

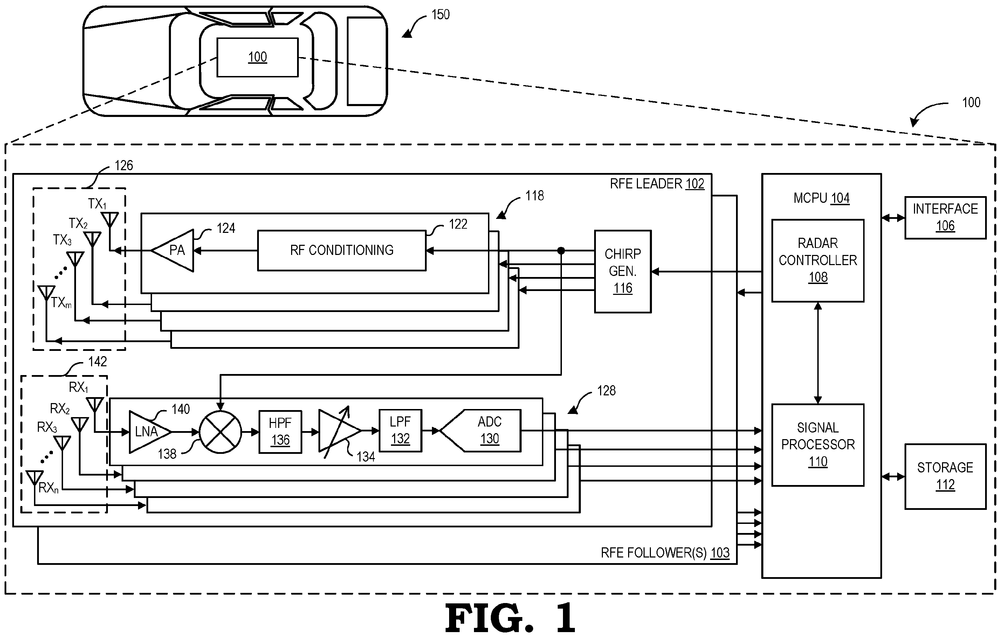

FIG. 1 shows a diagram illustrating a cascaded radar system, in accordance with various embodiments;

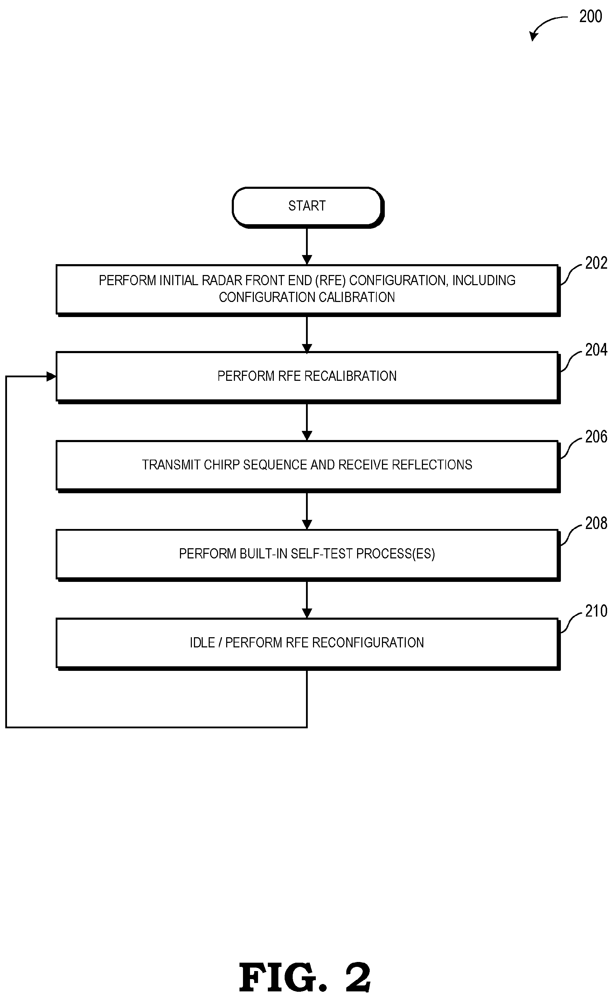

FIG. 2 shows an illustrative process flow for a method of operating a radar system, such as the radar system of FIG. 1, in accordance with various embodiments;

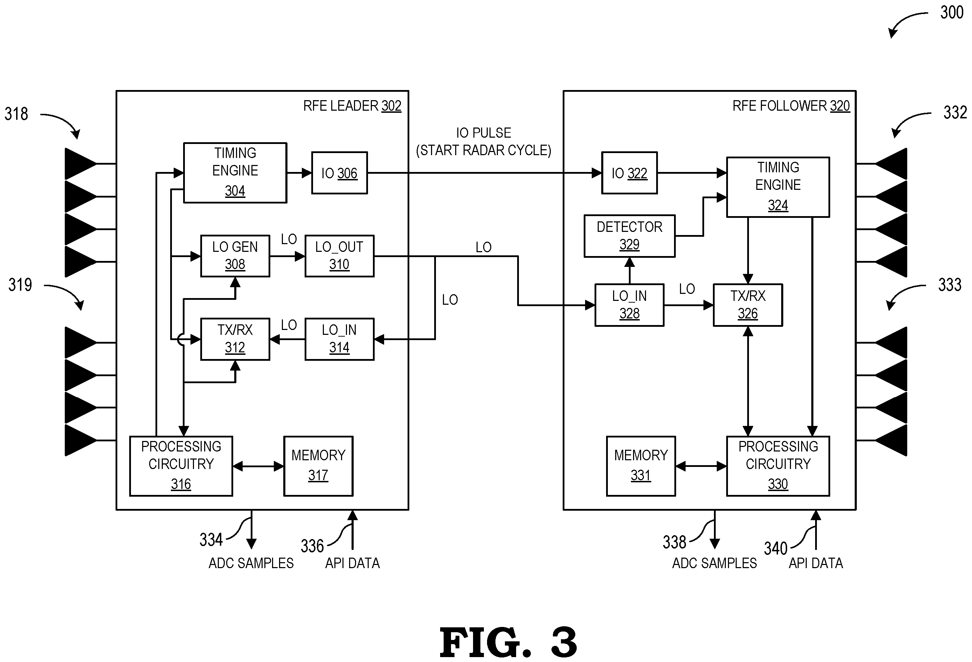

FIG. 3 shows a diagram illustrating a radar front end (RFE) leader and a RFE follower device of a cascaded radar system, where configuration calibration and recalibration of the RFE leader device and the RFE follower device are synchronized based a local oscillator (LO) signal sent from the RFE leader device to the RFE follower device via respective LO interfaces, and based on one or more predefined schedules, such as a radar cycle schedule, a configuration calibration schedule, and a recalibration schedule, in accordance with various embodiments;

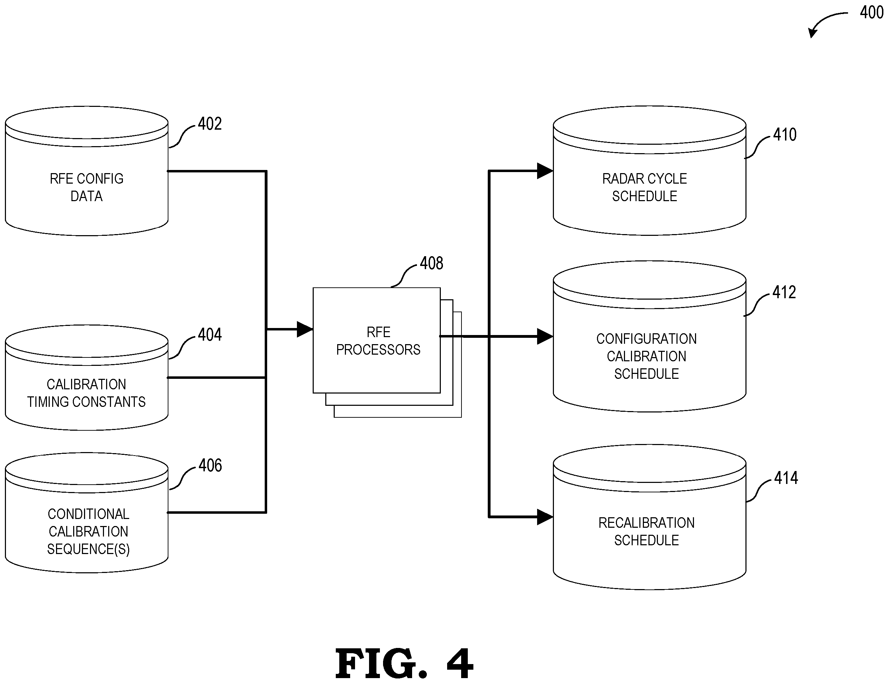

FIG. 4 shows an illustrative diagram illustrating the creation of radar cycle, configuration calibration, and recalibration schedules using RFE processors, such as processors of the RFE leader and RFE follower device of FIG. 3, in accordance with various embodiments;

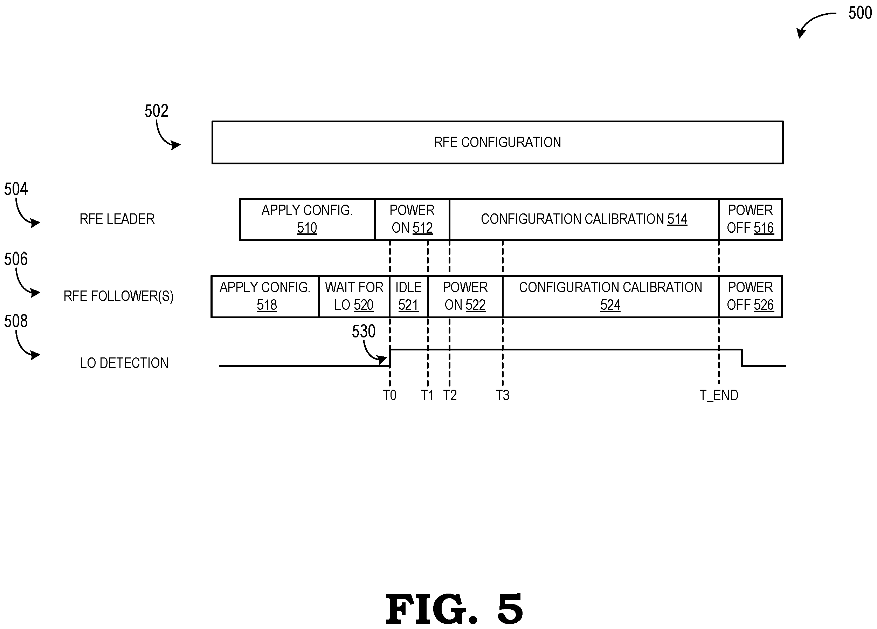

FIG. 5 shows an illustrative timing diagram showing an RFE configuration process for an RFE leader device and an RFE follower device, such as the RFE leader device and RFE follower device of FIG. 3, and showing an LO detection signal that may be used as a basis for triggering configuration calibration phases in both the RFE leader device and the RFE follower device(s), in accordance with various embodiments;

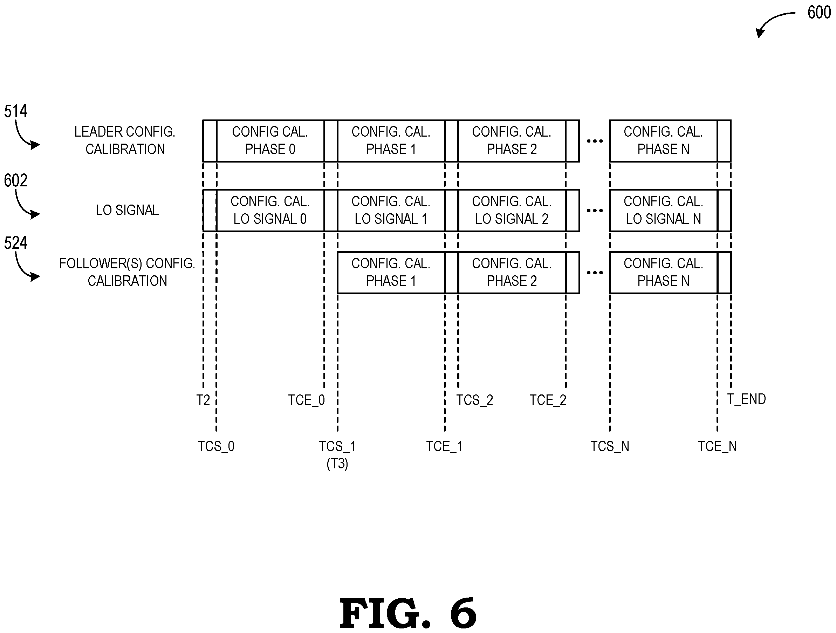

FIG. 6 shows an illustrative timing diagram showing the phases of configuration calibration processes, such as the configuration calibration processes of FIG. 5, for an RFE leader device and RFE follower device(s), such as the RFE leader device and RFE follower device of FIG. 3, and showing at which LO signals of defined types and frequencies may be provided by the RFE leader device to the RFE follower device(s), in accordance with various embodiments;

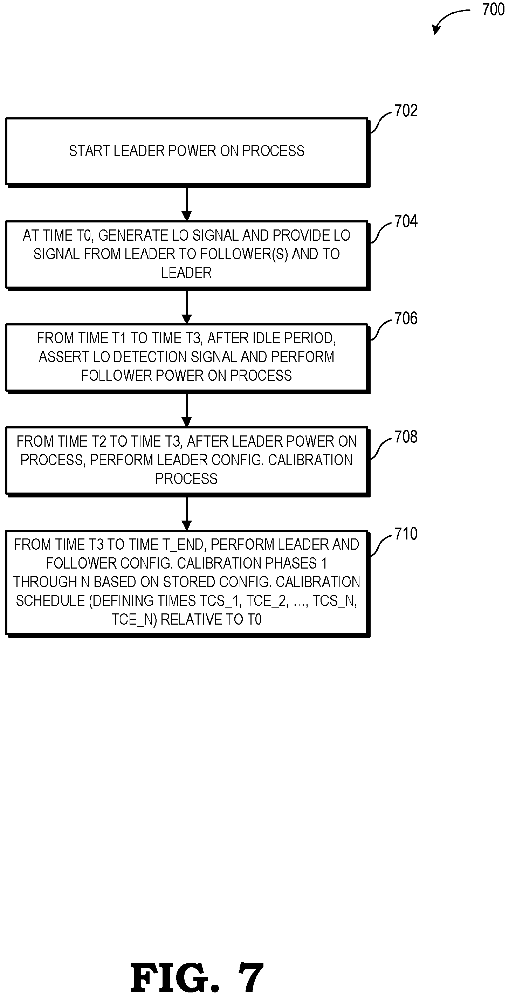

FIG. 7 shows an illustrative process flow for a method of performing synchronized configuration calibration of an RFE leader device and one or more RFE follower devices, such as the RFE leader device and RFE follower device of FIG. 3, based on detection of an LO signal sent by the RFE leader device to the RFE follower device(s) and based on a stored configuration calibration schedule, in accordance with various embodiments;

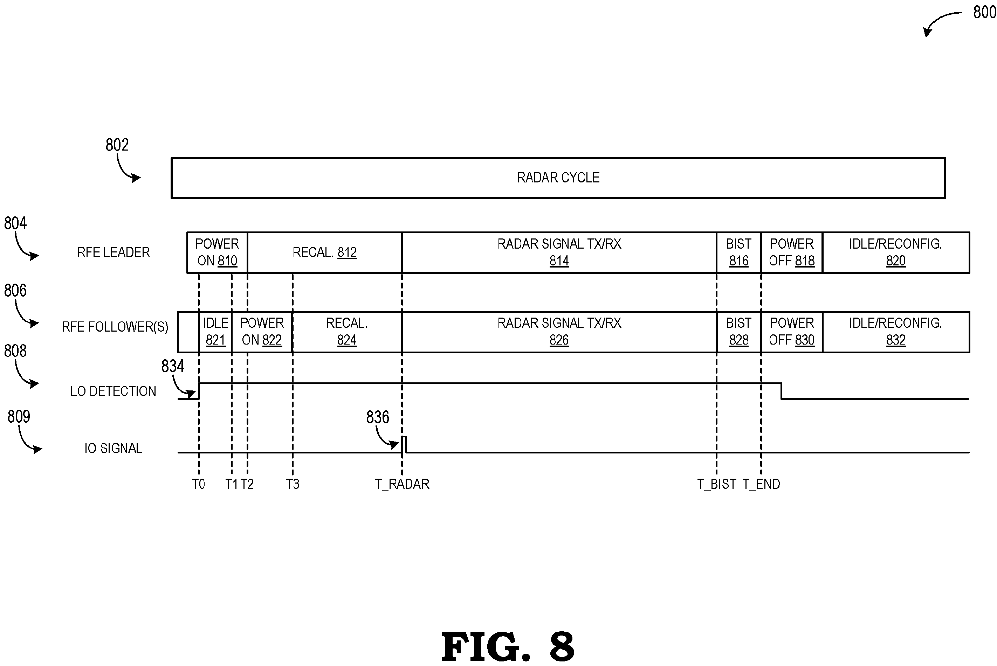

FIG. 8 shows an illustrative timing diagram showing an RFE radar cycle for an RFE leader device and an RFE follower device, such as the RFE leader device and RFE follower device of FIG. 3, and showing an LO detection signal that may be used as a basis for triggering the start of the radar cycle in both the RFE leader device and the RFE follower device(s), in accordance with various embodiments;

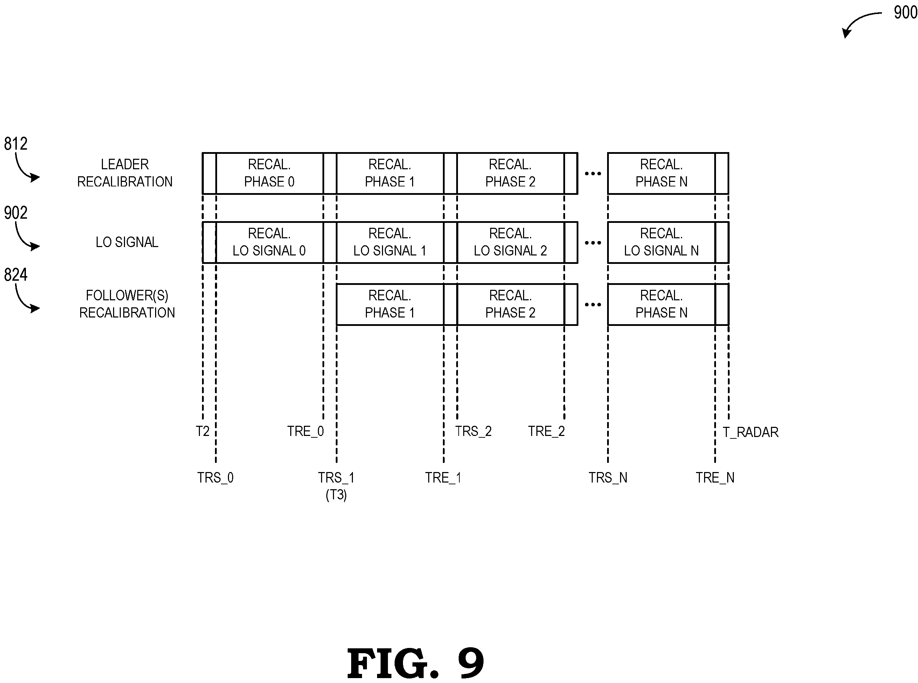

FIG. 9 shows an illustrative timing diagram showing the phases of recalibration processes, such as the recalibration processes of FIG. 5, for an RFE leader device and RFE follower device(s), such as the RFE leader device and RFE follower device of FIG. 3, and showing an LO signal sequence according to which LO signals of defined types and frequencies may be provided by the RFE leader device to the RFE follower device(s), in accordance with various embodiments;

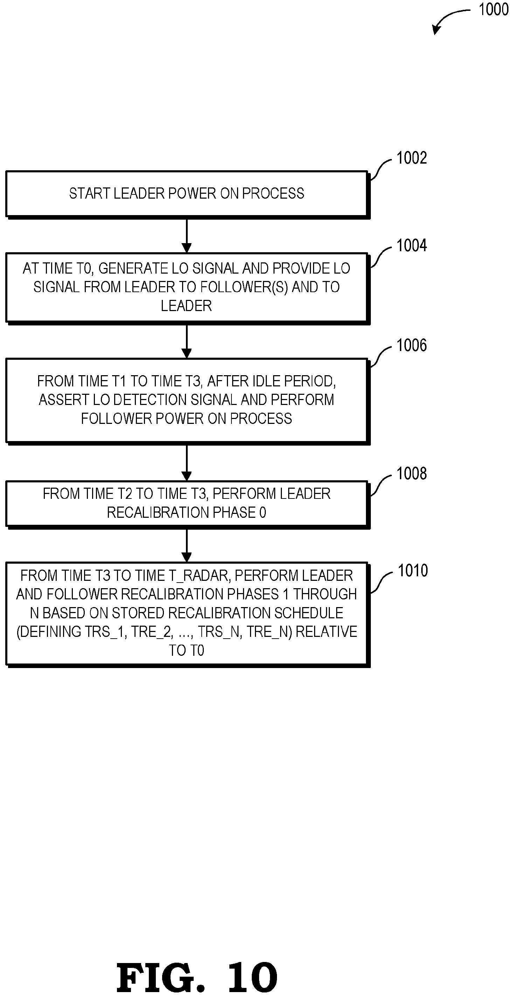

FIG. 10 shows an illustrative process flow for a method of performing synchronized recalibration of an RFE leader device and one or more RFE follower devices, such as the RFE leader device and RFE follower device of FIG. 3, based on a detection of an LO signal sent by the RFE leader device to the RFE follower device(s) and based on a stored recalibration schedule, in accordance with various embodiments.

### DETAILED DESCRIPTION

The following detailed description is merely illustrative in nature and is not intended to limit the embodiments described herein and uses of such embodiments. Furthermore, there is no intention to be bound by any expressed or implied theory presented in the preceding technical field, background, or the following detailed description.

For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Various embodiments described herein relate to radar systems, such as automotive radar systems, with cascaded arrangements in which radar front-end (RFE) circuitry is distributed between multiple RFE devices including an RFE leader device (sometimes referred to herein as a "leader" or "RFE leader") and at least one RFE follower device (sometimes referred to herein as a "follower" or "RFE follower"), and further relate to methods of synchronizing calibration processes (e.g., configuration calibration and recalibration processes) carried out by the RFE leader and RFE follower(s). In one or more embodiments, the RFE leader and RFE follower(s) of a cascaded radar system may each store a configuration calibration schedule and a recalibration schedule. The configuration calibration schedule for a given device (leader or follower) may define the timing at which to start and end configuration calibration phases for that device, relative to the time at which the RFE leader sends an initial local oscillator (LO) signal to the RFE follower(s) via an LO interface to trigger the start of the configuration calibration process. In one or more embodiments, the recalibration schedule for a given device (leader or follower) may define the timing at which to start and end recalibration phases for that device, relative to the time at which the RFE leader sends an initial LO signal to the RFE follower(s) via the LO interface to trigger the start of the radar cycle.

In one or more embodiments, a cascaded radar system includes a leader that generates and provides at least a shared LO signal and a shared clock signal to one or more followers to achieve coherency. Calibration of distributed cascaded radar systems may be a multi-stage process requiring different LO signal types and frequencies at different stages, which presents various challenges. For example, for the leader and the followers to be correctly synchronized and coherent, the leader may be required to provide the correct sequence of LO signal types and frequencies with the expected (i.e., as expected by the followers) timing, order, and respective duration, and the follower(s) must be aware of when the leader is expected to provide each LO signal.

Embodiments herein address these challenges by triggering configuration calibration and recalibration process steps or "phases" based on the time at which an initial LO signal is sent from an RFE leader to one or more RFE followers via an LO interface, and further based on schedules (e.g., configuration calibration schedules and recalibration schedules) stored locally at the RFE leader and the RFE followers. Such schedules may include a schedule for performing a sequence of calibration phases at the RFE leader, a schedule for performing a sequence of calibration phases at the RFE follower(s), a schedule for generating and providing (by the leader) a sequence of LO signals of various types and frequencies, a schedule for the various stages of a radar cycle, or any suitable combination of these, as non-limiting examples. Each schedule may define start times and end times for steps or phases for a calibration process and/or radar cycle relative to an initial time at which the initial LO signal is provided by the RFE leader. The RFE leader and the RFE followers may operate using a shared clock, which may avoid the issue of timer drift between the RFE leader and the RFE followers. In this way, the RFE leader and the RFE followers may be synchronized to track the time offset from the time at which the initial LO signal is provided with a suitable degree of accuracy over time, where this time offset is a basis for synchronized calibration of the RFE leader and the RFE followers.

FIG. 1 shows an illustrative diagram of a radar system 100 which includes a radar front end (RFE) leader device 102 (sometimes referred to herein as the "leader device 102" or "leader 102") and one or more RFE follower devices 103 (sometimes referred to herein as "follower device(s) 103" or "follower(s) 103"). In one or more embodiments, the leader 102 and the follower(s) 103 are connected to a radar microcontroller and processing unit (MCPU) 104, however this centralized arrangement is intended to be illustrative and non-limiting. For example, in one or more other embodiments, one or more functions of the MCPU 104 (e.g., application processing or digital signal processing) may be fully or partially distributed to local processing circuitry at the leader 102 and the follower(s) 103. The leader 102 and the follower(s) 103 may be configured to perform synchronized calibration processes (e.g., an initial configuration calibration process followed by a recalibration process once per radar cycle), where synchronization of the calibration processes between the leader 102 and the follower(s) 103 is based on the time at which an initial LO signal sent by the leader 102 to the follower(s) 103. Herein, the "initial LO signal" refers to the first LO signal generated by the leader device in a given RFE configuration process or a given radar cycle iteration. The synchronization of such calibration processes may be further based on one or more schedules (configuration calibration schedules and recalibration schedules) that may be locally stored at a memory device or other suitable computer-readable media of each of the leader 102 and the follower(s) 103. Such schedules may define calibration steps or phases relative to the time at which the leader sends an initial LO signal 102 to the followers 103.

In one or more embodiments, the radar system 100 may be a Multiple-Input Multiple-Output (MIMO) radar system, such as a Linear Frequency Modulation (LFM) MIMO radar system (e.g., an LFM automotive MIMO radar system). In one or more embodiments, each of the RFE leader device 102 and the RFE follower device(s) 103 may include radar front-end (RFE) hardware. In one or more embodiments, the RFE leader device 102 and the RFE follower device(s) 103 may be embodied as a line-replaceable unit (LRU) or modular component that is designed to be replaced quickly at an operating location. Similarly, the radar MCPU 104 may be embodied as a line-replaceable unit (LRU) or modular component. In accordance with various embodiments, the radar system 100 may be implemented as part of an automotive system in conjunction with an Advanced Driver Assistance System (ADAS) of a vehicle, such as a vehicle 150. It should be understood that components of the radar system 100 may be distributed at various locations on or within the vehicle 150 (e.g., with antennas located at one or more front, rear, or side panels of the vehicle 150, at front or rear bumpers of the vehicle 150, or at other suitable locations on the vehicle 150, or at a combination of such locations; with processing circuitry, transmitter modules, and receiver modules being disposed at one or more locations inside the vehicle 150).

The each of the RFE leader device 102 and the RFE follower device(s) 103 includes one or more transmitting antenna elements 126 (sometimes referred to herein as "transmit antennas 126") and receiving antenna elements 142 (sometimes referred to herein as "receive antennas 142") connected, respectively, to one or more radio-frequency (RF) transmitter (TX) modules 118 and receiver (RX) modules 128. Each transmit antenna 126 and TX module may be associated with a respective transmit channel of a group of transmit channels designated herein as TX₁, TX₂, TX₃, ... TXₘ, where "m" is the total number of transmit channels. Each receive antenna 142 and RX module 128 may be associated with a respective receive channel of a group of receive channels designated herein as RX₁, RX₂, RX₃, ... RXₙ, where "n" is the number of receive (RX) channels. As a non-limiting example, a radar device (e.g., the RFE leader device 102 and the RFE follower device(s) 103) can include individual antenna elements (e.g., transmitting antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and non-limiting, with other quantities of these elements being possible in one or more other embodiments, such as four transmitter modules 118 and six receiver modules 128, or a single transmitter module 118 and/or a single receiver module 128.

Each of the RFE leader device 102 may include a chirp generator 116, which is configured to supply chirp input signals, which may be LO signals, to the transmitter modules 118. In one or more embodiments, the RFE follower device(s) may not include chirp generation circuitry, and the generated signals may be provided to the RFE followers 103 (e.g., for use by transmit modules thereof) in addition to the transmit modules 118. In one or more embodiments, the chirp generator 116 may be configured by a digital control interface, which may include a set of registers, and which may be controlled by the MCPU 104. The chirp generator 116 is configured to generate chirp signals (e.g., LO signals) and send the generated signals to the transmitter modules 118 for transmission via the transmitting antenna elements 126. In one or more embodiments, each transmitter module 118 includes an RF conditioning module 122 that may be configured to filter the chirp signals prior to transmission. In one or more embodiments, the RF conditioning module 122 may include one or more frequency multipliers configured to increase the frequency of chirp signals output by the chirp generator 116. Each transmitter module 118 includes a power amplifier 124, which may be configured to amplify the filtered chirp signals before they are provided to and transmitted via one or more corresponding transmitting antenna elements 126. Herein, a transmitted chirp signal is sometimes referred to as a "transmit signal" or a "transmitted radar signal."

One or more of the radar signals transmitted by the transmitter modules 118 and transmit antennas 126 may be reflected by an object in an environment of the radar system 100, and at least part of the reflected radar signal(s), sometimes referred to herein as "return signals," "reflections," or "echoes" may be included in an RF signal that is received by the receiving antenna elements 142 at the RFE device that includes the antenna elements 142 (e.g., the corresponding one of the RFE leader device 102 or the RFE follower device(s) 103). In one or more embodiments, a reflected radar signal received via one of the receiving antenna elements 142 and a corresponding one of the receiver modules 128 corresponds to a reflection of a chirp signal transmitted via one of the transmit antennas 126 and a corresponding transmitter module 118. The received reflection may include interference components attributable to one or more interference signals in the environment of the radar system 100 (e.g., with such interference signals being removed during subsequent processing, which may be performed by the signal processor 110). At each receiver module 128, the received RF signal (e.g., which may include a reflected radar signal) is amplified by a low noise amplifier (LNA) 140 and then provided to a mixer 138 where the received RF signal is mixed with a corresponding LO signal output by the chirp generator 116. The resulting intermediate frequency (IF) signal is provided to a high-pass filter (HPF) 136. The resulting filtered signal is provided to a variable gain amplifier 134, which amplifies the filtered signal before providing the resultant amplified filtered signal to a low pass filter (LPF) 132. The LPF 132 filters the amplified filtered signal to produce a re-filtered signal. This re-filtered signal is provided to an analog/digital converter (ADC) 130 and is output by the receiver module 128 (e.g., output to the signal processor 110 of the MCPU 104) as a digital signal. In one or more embodiments, by processing received RF signals in this way, the receiver modules 128 may compress the echo of various delays into multiple sinusoidal tones whose frequencies correspond to the round-trip delay of the echo.

In the radar system 100, the radar MCPU 104 may be connected to and configured to supply input control signals to the RFE leader device 102 and the RFE follower device(s) 103 and to receive therefrom digital output signals (e.g., ADC outputs) generated by the receiver modules 128. In one or more embodiments, the radar MCPU 104 includes a radar controller 108 and a signal processor 110 (sometimes referred to herein as "signal processing circuitry 110"), either or both of which may be embodied as a microcontroller unit or other suitable processing unit. The MCPU 104, the radar controller 108, and the signal processor 110 each include or are implemented by computer processing circuitry, in accordance with various embodiments. In one or more other embodiments, one or more functions of the radar controller 108 or the signal processor 110, such as control and scheduling of calibration processes, may be performed using hardware logic or computer processing circuitry that is included in each of the RFE leader device 102 and the RFE follower device(s) 103 (e.g., separate from the MCPU 104).

In one or more embodiments, the radar controller 108 can receive data from the RFE leader device 102 and the RFE follower device(s) 103 (e.g., from the receiver modules 128) and can control radar parameters of the RFE leader device 102 and the RFE follower device(s) 103, such as frequency band, length of each radar frame, and the like via a digital control interface (e.g., registers). For example, a given RFE device (e.g., one of the RFE leader device 102 or the RFE follower device(s) 103) may be used to adjust the radar chirp signals output from the chirp generator 116 included in that RFE device based on parameters defined via such a digital control interface. The signal processor 110 may be configured and arranged for signal processing tasks such as, but not limited to, object identification, interference mitigation, computation of the distance or range to a detected object, computation of the radial velocity of a detected object, and computation of the AoA of signals reflected by a detected object, and the like. Herein, the term "AoA" or "Angle-of-Arrival" refers to the angle of a reflected signal (e.g., a reflected radar signal) incident on an antenna array. The signal processor 110 can provide calculated values associated with such computations to a storage 112 and/or to other systems via an interface 106.

The interface 106 can enable the MCPU 104 to communicate with other systems over local and wide area networks, the internet, automotive communication buses, and/or other kinds of wired or wireless communication systems, as non-limiting examples. In one or more embodiments, the MCPU 104 can provide the calculated values over the interface 106 to other systems, such as a radar-camera-lidar fusion system; an automated driving assistance system including parking, braking, or lane-change assistance features; or the like. The storage 112 can be used to store instructions for the MCPU 104, received data from the RFE leader device 102 and the RFE follower device(s) 103, calculated values from the signal processor 110, and the like. Storage 112 can be any suitable storage medium, such as a volatile or non-volatile computer-readable memory.

To control the transmitter modules 118, the radar controller 108 may, for example, be configured to generate transmitter input signals, which may correspond to one or more of a program, a control trigger, reference LO signal(s), or frequency spectrum shaping signals (such as ramp generation in the case of Frequency-Modulated Continuous Wave (FMCW) radar), as non-limiting examples. The radar controller 108 may, for example, be configured to receive data signals, sensor signals, and/or register programming or state machine signals for RF (radio frequency) circuit enablement sequences.

At each receiver module 128, digital output signals are generated (e.g., as ADC samples generated by the ADCs 130) from return signals (i.e., reflected radar signals received via the receiver modules 128) for digital processing by the signal processor 110 to construct and accumulate multiple-input multiple-output (MIMO) array vector outputs forming a MIMO aperture for use in computing plots or maps for AoA estimation and object tracks. For example, upon receiving raw ADC samples from an ADC 130 of a receiver module 128, the signal processor 110 may perform one or more interference suppression processes on the digital output signals before processing the resultant interference-suppressed ADC samples using one or more fast Fourier transform (FFT) modules or Discrete Fourier Transform (DFT) modules, such as a fast-time (range) FFT module and a slow-time (Doppler) FFT module. In one or more embodiments, processing of the interference-suppressed ADC samples by the fast-time FFT module generates a range chirp antenna cube (RCAC) and subsequent processing of the RCAC by the slow-time (Doppler) FFT module generates a range-Doppler antenna cube (RDAC) (e.g., including range-Doppler response maps for each receive antenna 142). The signal processor 110 may then perform Constant False Alarm Rate (CFAR) detection on the range-Doppler antenna cube to detect peaks in the RDAC. The signal processor 110 may further process the RDAC based on the detected peaks to construct a MIMO array vector which the signal processor 110 then processes to perform AoA estimation and object tracking. The MCPU 104 may then output the resulting object tracks (e.g., via the interface 106) to other automotive computing or user interfacing devices for further processing or display.

FIG. 2 shows an illustrative process flow for a method 200 for performing an initial configuration and one or more radar cycles for RFE devices of a radar system, where the initial configuration includes a configuration calibration process (e.g., which may include one or more steps of the method 700 of FIG. 7) and each radar cycle includes a recalibration process (e.g., which may include one or more steps the method 1000 of FIG. 10). The method 200 may be performed using RFE devices of a radar system (e.g., the RFE leader device 102 and the RFE follower device(s) 103 of the radar system 100 of FIG. 1). The method 200 is described with reference to elements of the radar system 100 of FIG. 1. However, it should be understood that this is illustrative and non-limiting, at least in that other suitable radar systems may be used to carry out the method 200 in one or more other embodiments.

At block 202, the RFE leader device 102 and the RFE follower device(s) 103 perform an initial configuration process. The initial configuration process may include, for each of the RFE devices 102 and 103, loading a configuration (i.e., data defining a configuration) from memory (e.g., flash memory, as a non-limiting example), applying the configuration to the analog and digital hardware of each of the RFE devices 102 and 103, and performing a configuration calibration process. The configuration calibration process may include calibrating signal frequency, gain, and frequency/phase response of various analog and digital sub-components (e.g., amplifiers, buffers, filters, phase-locked loops (PLLs), phase rotators, clocks, or the like, as non-limiting examples) of the RFE leader device 102 and the RFE follower device(s) 103. The configuration calibration process may start in response to an initial LO signal provided by the RFE leader device 102 to the RFE follower device(s) 103. The timing of configuration calibration process steps or "phases" may be determined based on a configuration calibration schedule, and may be defined relative to the time at which the initial LO signal is sent by the RFE leader device 102 before the start of the configuration calibration process. In this way, the initial LO signal provided by the RFE leader device 102 before the start of the configuration calibration process may be used as a basis for synchronizing calibration of the RFE leader device 102 and the RFE follower device(s) 103 during the configuration calibration process.

Each phase of the configuration calibration process may require a specific local oscillator (LO) signal type and frequency, where the LO signal type and frequency required may differ for different phases. For example, different LO signal types may include continuous wave signals (e.g., for calibration at a specific frequency) or frequency modulated signals (e.g., for calibration over a range of frequencies), as non-limiting examples. During the configuration calibration process, the power, frequency, and/or phase of the RFE component under calibration (e.g., in the RFE leader device 102, the RFE follower device(s) 103, or in each of these) is measured while an input signal is applied, where the input signal directly or indirectly originates from an LO signal generated by the RFE leader device 102. At each phase of the configuration calibration process, the RFE leader device 102 may generate and provide an LO signal of the appropriate (e.g., schedule-defined) type and frequency to the RFE follower device(s) 103 based on a locally stored configuration calibration schedule, with the timing at which each LO signal is provided being defined relative to the time at which the initial LO signal is sent by the RFE leader device 102 before the start of the configuration calibration process. In one or more embodiments, the RFE leader device 102 may provide the LO signal to one of its own inputs (i.e., an LO input interface of the RFE leader device 102) along a signal path that is equal in length or substantially equal in length (e.g., "line length") to the signal path(s) that carries the LO signal from the RFE leader device 102 to the RFE follower device(s) 103, such that the phase of the LO signal received at the input of the RFE leader device 102 is the same or substantially the same as the phase of the LO signal(s) received at the input(s) of the RFE follower device(s) 103. Using shared LO signals to carry out the configuration calibration process in this way may mitigate or otherwise reduce differences in frequency, phase, and signal power between the LO signals used for configuration calibration at RFE leader device 102 and the LO signals used for configuration calibration at the RFE follower device(s) 103, at least when compared to conventional embodiments in which each RFE device generates its own LO signal.

At block 204, corresponding to the start of a radar cycle, the RFE leader device 102 and the RFE follower device(s) 103 perform a recalibration process. The recalibration process may include calibrating signal frequency, gain, and frequency/phase response of various analog and digital sub-components (e.g., amplifiers, buffers, filters, phase-locked loops (PLLs), phase rotators, clocks, or the like, as non-limiting examples) of the RFE leader device 102 and the RFE follower device(s) 103. In one or more embodiments, the recalibration process may be similar to or the same as the configuration calibration process. In one or more other embodiments, the recalibration process may be a faster calibration process (e.g., faster than the configuration calibration process) or a delta calibration process. The start of each radar cycle may be triggered in response to an initial LO signal provided by the RFE leader device 102 to the RFE follower device(s) 103. The timing of recalibration process steps or "phases" may be determined based on a recalibration schedule, and may be defined relative to a time at which the initial LO signal is sent by the RFE leader device 102 at the start of the radar cycle. In this way, initial LO signal pulse provided by the RFE leader device 102 at the start of the radar cycle may be used as a basis for synchronizing calibration of the RFE leader device 102 and the RFE follower device(s) 103 during the recalibration process.

Similar to the configuration calibration process described above, each phase of the recalibration process may require a specific local oscillator (LO) signal type and frequency. The RFE leader device 102 may be configured to generate and provide LO signals of varying types and frequencies based on the recalibration schedule and with LO signal timing being defined relative to the time at which the initial LO signal is provided by the RFE leader device 102 at the start of the radar cycle.

At block 206, the RFE leader device 102 and the RFE follower device(s) 103 each transmit a chirp sequence (e.g., a sequence of radar signals) via the transmitter modules 118 and the transmit antennas 126 and each receive reflections of the transmitted chirps via the receiver modules 128 and the receive antennas 142. The reflections may correspond to transmitted chirps after they have been reflected by one or more objects in an environment of the radar system 100. Such reflections are sometimes referred to as "reflected radar signals" herein. In one or more embodiments, an input/output (IO) signal pulse may be provided by the RFE leader device 102 to the RFE follower device(s) 103 via an IO interface to trigger the start of the chirp sequence transmission.

At block 208, after transmitting the chirp sequence and receiving associated reflections, the RFE leader device 102 and the RFE follower device(s) 103 perform one or more built-in self-test (BIST) processes. For example, the BIST processes may include one or more tests that determine whether certain components or subsystems of the RFE leader device 102 and the RFE follower device(s) 103 are properly functional. In one or more embodiments, the timing of the BIST processes may be defined according to a radar cycle schedule stored at the RFE leader device 102 and the RFE follower device(s) 103, and such timing may be defined relative to the time at which the initial LO signal is sent by the RFE leader device 102 to the RFE follower device(s) 103 at the start of the radar cycle. In one or more embodiments, one or more BIST processes may require LO signals. In such embodiments, the performance of such BIST processes and the generation of the corresponding LO signals may be synchronized relative to the time at which the initial LO signal is provided by the RFE leader device 102.

At block 210, the RFE leader device 102 and the RFE follower device(s) 103 may be reconfigured or may remain idle for a predefined duration after which the method 200 returns to block 204 to start a new radar cycle.

FIG. 3 shows an illustrative block diagram of RFE circuitry 300 including an RFE leader 302 and an RFE follower 320. While a single RFE follower 320 is shown in the present example, it should be understood that the RFE leader 302 may be connected to one or more other RFE followers in addition to the RFE follower 320. The RFE circuitry 300 may be implemented as part of a radar system, such as the radar system 100 of FIG. 1. For example, the RFE leader 302 may correspond to an example embodiment of the RFE leader 102 of FIG. 1, and the RFE follower 320 may correspond to the RFE follower 103 of FIG. 1. In one or more embodiments, functionality of the RFE leader 302 and the RFE follower 320 may be similar to that of the RFE leader 102 and the RFE follower(s) 103 of FIG. 1. In one or more embodiments, the RFE circuitry 300 may be configured to carry out an initial configuration process and one or more radar cycles in accordance with the method 200 of FIG. 2. In one or more embodiments, the RFE leader 302 may be implemented as a first device disposed in a first location in or on a vehicle (e.g., the vehicle 150 of FIG. 1) and the follower device 320 may be implemented as a separate second device that is disposed in a different location in or on the vehicle.

As shown, the RFE leader 302 includes a timing engine 304, an IO interface 306, LO signal generation circuitry 308, an LO signal output interface 310, an LO signal input interface 314, transmit/receive (TX/RX) circuitry 312, processing circuitry 316, and a memory 317. The RFE leader 302 may include or may be coupled to transmit antennas 318 and receive antennas 319. The RFE follower 320 includes an IO interface 322, a timing engine 324, an LO signal input interface 328, detector circuitry 329, transmit/receive circuitry 326, processing circuitry 330, and memory 331. The RFE follower 320 may include or may be coupled to transmit antennas 332 and receive antennas 333.

The timing engine 304 may be communicatively coupled to the IO interface 306, the LO signal generation circuitry 308, the TX/RX circuitry 312, and the processing circuitry 316. The timing engine 324 may be communicatively coupled to the IO interface 322, the TX/RX circuitry 326, and the processing circuitry 330. The timing engine 304 may be configured to generate and provide timing signals to various modules of the RFE leader 302, including the IO interface 306, the LO signal generation circuitry 308, and the TX/RX circuitry 312. The timing engine 324 may be configured to generate and provide timing signals to various modules of the RFE leader 302, including the TX/RX circuitry 326. For example, timing signals provided by the timing engine 304 and the timing engine 324 may define timing for chirp signal transmission (e.g., at block 206 of the method 200 of FIG. 2). The timing engine 304 of the RFE leader 302 may be configured to provide an IO signal (e.g., an "IO pulse" or "IO signal pulse") to the timing engine 324 of the RFE follower 320 via the IO interface 306 and the IO interface 322 to trigger the start of the radar signal transmit/receive (TX/RX) process (e.g., chirp sequence transmission) during each radar cycle.

The TX/RX circuitry 312 and the TX/RX circuitry 326 may each include respective sets of transmitter modules and receiver modules, which may be similar to or which may correspond to embodiments of the transmitter modules 118 and the receiver modules 128 of FIG. 1. Transmitter modules of the TX/RX circuitry 312 may be coupled to the transmit antennas 318. Receiver modules of the TX/RX circuitry 312 may be coupled to the transmit antennas 319. Transmitter modules of the TX/RX circuitry 326 may be coupled to the transmit antennas 332. Receiver modules of the TX/RX circuitry 326 may be coupled to the receive antennas 333.

The RFE leader 302 and the RFE follower 320 may provide ADC samples generated by the TX/RX circuitry 312 and the TX/RX circuitry 326, respectively, to one or more digital signal processors that are coupled to one or both of an output 334 of the RFE leader 302 and an output 338 of the RFE follower 320. For example, such ADC samples may be generated by ADCs (e.g., the ADC 130 of FIG. 1) based on reflected radar signals received by receiver modules of the TX/RX circuitry 312 and the TX/RX circuitry 326 during radar signal transmission and reflection reception (e.g., chirp sequence transmission and reflection reception at block 206 of the method 200 of FIG. 2)

The RFE leader 302 and the RFE follower 320 may receive high-level application programming interface (API) data via API data interfaces 336 and 340, respectively, from one or more external processors of the radar system (e.g., the radar controller 108 of FIG. 1 or multiple distributed processors, according to various embodiments). In one or more embodiments, the high-level API data may include instructions for starting the initial configurations of the RFE leader 302 and the RFE follower 320. In one or more embodiments, the high-level API data may include instructions for starting the initial radar cycle following completion of the initial configurations of the RFE leader 302 and the RFE follower 320.

The LO signal generation circuitry 308 may be configured to generate LO signals of various types and frequencies. For example, different LO signal types may include continuous wave signals (e.g., for calibration at a specific frequency) or frequency modulated signals (e.g., for calibration over a range of frequencies), as non-limiting examples. LO signals generated by the LO signal generation circuitry 308 may be used as a basis for chirp transmission during the chirp transmission sequence of the radar cycle. LO signals generated by the LO signal generation circuitry 308 may be used for configuration calibration and recalibration of the RFE leader 302 and the RFE follower 320. LO signals generated by the LO signal generation circuitry 308 may be used for one or more BIST processes carried out by the RFE leader 302 and the RFE follower 320. LO signals generated by the LO signal generation circuitry 308 may be shared by the RFE leader 302 and the RFE follower 320. For example, the LO signal generation circuitry 308 may provide a generated LO signal to the LO signal input interface 328 of the RFE follower 320 and to the LO signal input interface 314 of the RFE leader 302. The LO signal input interface 328 may provide the LO signal to the TX/RX circuitry 326 for use in generating radar signals for chirp sequence transmission or a calibration process. The LO signal input interface 314 may provide the LO signal to the TX/RX circuitry 312 for use in generating radar signals for chirp sequence transmission or a calibration process. The connection between the LO signal output interface 310 and the LO signal input interface 328 may have a line length that is equal to or substantially equal to the line length of the connection between the LO signal output interface 310 and the LO signal input interface 314, which may ensure that the phase of the LO signal received at the LO signal input interface 314 is equal to or substantially equal to the phase of the LO signal received at the LO signal input interface 328. In one or more embodiments, the RFE leader 302 and the RFE follower 302 may use the time at which an initial LO signal is provided via the LO signal output interface 310 during a power on process of the RFE leader 302 to establish a common time reference for synchronizing calibration phases of the RFE leader 302 and the RFE follower 320 and corresponding LO signal generation by the LO signal generation circuitry 308 in a given radar cycle or RFE configuration process.

The processing circuitry 316 may be communicatively coupled to the memory 317. The memory 317 include one or more computer-readable memory devices, such as a flash memory device, a one-time-programmable (OTP) memory device, or one or more other suitable computer-readable memory devices. The memory 317 may store computer-readable instructions which, when executed by the processing circuitry 316, may cause the processing circuitry 316 to perform at the various functions described herein (e.g., calibration of the TX/RX circuitry 312, and control of the LO signal generation circuitry 308, as non-limiting examples).

The processing circuitry 330 may be communicatively coupled to the memory 331. The memory 331 include one or more computer-readable memory devices, such as a flash memory device, a one-time-programmable (OTP) memory device, or one or more other suitable computer-readable memory devices. The memory 331 may store computer-readable instructions which, when executed by the processing circuitry 330, may cause the processing circuitry 330 to perform at the various functions described herein (e.g., calibration of the TX/RX circuitry 326, as a non-limiting example).

The processing circuitry 316 may be configured to calibrate the TX/RX circuitry 312 during the configuration calibration process and the recalibration process. The processing circuitry 316 may be configured to control the LO signal generation circuitry 308 and to calibrate the TX/RX circuitry 312 during the configuration calibration process according to a configuration calibration schedule stored in the memory 317. The timing of each phase of the configuration calibration process may be defined relative to the time at which an initial LO signal is provided by the RFE leader 302 to the RFE follower 320 during a leader power on process of the RFE leader 302 during an RFE configuration process. The processing circuitry 316 may be configured to control the LO signal generation circuitry 308 and to calibrate the TX/RX circuitry 312 during the recalibration process according to a recalibration schedule stored in the memory 317. The timing of each phase of the recalibration process may be defined relative to the time at which an initial LO signal is provided by the RFE leader 302 to the RFE follower 320 during a leader power on process of the RFE leader 302 during the radar cycle in which the recalibration process is performed.

The processing circuitry 330 may be configured to calibrate the TX/RX circuitry 326 during the configuration calibration process and the recalibration process. The processing circuitry 330 may be configured to calibrate the TX/RX circuitry 312 during the configuration calibration process according to a configuration calibration schedule stored in the memory 331. Timing of each phase of the configuration calibration process may be defined relative to the time at which the initial LO signal is provided by the RFE leader 302 to the RFE follower 320 during the leader power on process of the RFE leader 302 during the RFE configuration process. The processing circuitry 330 may be configured to calibrate the TX/RX circuitry 312 during the recalibration process according to a recalibration schedule stored in the memory 331. The timing of each phase of the recalibration process may be defined relative to the time at which the initial LO signal is provided by the RFE leader 302 to the RFE follower 320 during the leader power on process of the RFE leader 302 during the radar cycle in which the recalibration process is performed.

In one or more embodiments, detector circuitry 329 of the RFE follower 320 may detect the initial LO signal received at the LO signal input interface 328 of the RFE follower 320. In response to detecting the initial LO signal, the detector circuitry 329 may be configured to assert (e.g., set to a high logic level, as a non-limiting example) an LO detection signal that the detector circuitry 329 provides to the timing engine 324. The timing engine 324 may determine the time at which the initial LO signal is provided by the RFE leader 302 based on the time at which the LO detection signal is asserted by the detector circuitry 329.

In one or more embodiments, the transmission time of an initial LO signal sent by the RFE leader 302 (where the LO signal provides a time reference for subsequently triggering the start of the configuration calibration process or the start of a radar cycle) may cause a time offset between the RFE leader 302 and the RFE follower 320. To account for this time offset, the measured initial LO signal time at either the RFE leader 302 or the RFE follower 320 may be shifted by the estimated duration of the LO signal transmission for improved synchronization. For example, the RFE follower 320 may subtract the estimated LO signal transmission time from the time at which the RFE follower 320 receives the initial LO signal to more accurately determine the actual time of LO signal transmission, thereby establishing a common time reference with the RFE leader 302. Here, the terms "duration of transmission" and "transmission time" refer to the time that it takes for a signal to propagate across the connection through which the signal is being transmitted, and does not refer to the entire length of time during which transmission of the signal is maintained.

Examples of LO-signal-based timing and synchronization for the configuration calibration process are described in more detail below in connection with FIGS. 5-7. Examples of LO-signal-based timing and synchronization for the and recalibration process are described in more detail below in connection with FIGS. 8-10.

FIG. 4 shows an illustrative diagram 400 representing the generation of radar cycle, configuration calibration, and recalibration schedules by computer processing circuitry of RFE circuitry of a radar system based on one or a combination of configuration data, calibration timing constants, or a conditional calibration sequence. In one or more embodiments, configuration data 402, calibration timing constants 404, and one or more conditional calibration sequences 406 may be stored at local memory devices or other suitable non-transitory computer readable media of the RFE circuitry (e.g., the RFE circuitry 300 of FIG. 3) of a radar system (e.g., the radar system 100 of FIG. 1). RFE processors 408 may be included in an RFE leader (e.g., the processing circuitry 316 of the RFE leader 302 of FIG. 3) and one or more RFE followers (e.g., the processing circuitry 330 of the RFE follower 320 of FIG. 3). Each of the RFE processors 408 may be configured to generate, respectively, a radar cycle schedule 410, a configuration calibration schedule 412, and a recalibration schedule 414 based on one of or a combination of the configuration data 402, the calibration timing constants 404, and the one or more conditional calibration sequences 406 stored at the corresponding RFE leader or RFE follower. The configuration calibration schedule 412 and the recalibration schedule 414 may each be considered a type of "calibration schedule." In one or more embodiments, the RFE leader may store the configuration data 402, the calibration timing constants 404, the one or more conditional calibration sequences 406, for both the RFE leader and for the RFE followers.

In one or more other embodiments, the RFE leader has access to the configuration data 402 for each RFE follower and, based on that configuration data, the RFE leader generates the schedules 410, 412, and 414 for the RFE followers. In one or more other embodiments in which differences in leader and follower configuration would not impact radar cycle and calibration scheduling, the RFE leader may generate the schedules 410, 412, and 414 for the RFE followers without access to the configuration 402 for each RFE follower.

Using the RFE circuitry 300 of FIG. 3 as an example, the memory 317 may be configured to store the configuration data 402, the calibration timing constants 404, and the one or more conditional calibration sequences 406 for both the RFE leader 302 and the RFE follower 320, and the processing circuitry 316 may be configured to generate the radar cycle schedule 410, the configuration calibration schedule 412, and the recalibration schedule 414 based on the stored configuration data 402, calibration timing constants 404, and one or more conditional calibration sequences 406 for both the RFE leader 302 and the RFE follower 320. The memory 331 may be configured to store the configuration data 402, the calibration timing constants 404, and the one or more conditional calibration sequences 406 for the RFE follower 320, and the processing circuitry 330 may be configured to generate the radar cycle schedule 410, the configuration calibration schedule 412, and the recalibration schedule 414 for the RFE follower 320 based on the stored configuration data 402, calibration timing constants 404, and one or more conditional calibration sequences 406. In one or more embodiments, the RFE follower 320 may additionally store, at the memory 331, configuration data 402, calibration timing constants 404, and one or more conditional calibration sequences 406 for the RFE leader 302.

The configuration data 402 may define external behavior of the corresponding RFE device. For example, the configuration data 402 may define the chirp sequence for transmission, receiver settings, aspects of the radar cycle, BIST processes to be performed, and the like. The configuration data 402 may be specific to a particular radar sensor design, a particular use case for a radar sensor, or both.

In one or more embodiments, the calibration timing constants 404 may be predefined and may be specific to the integrated circuit(s) used to implement a particular RFE leader or follower. For example, the calibration timing constants 404 may define the "worst-case" durations for various calibration functions, each corresponding to the calibration of one or more components of the RFE leader or an RFE follower. Herein, a "worst-case" duration refers to a maximum expected duration of a particular calibration function, which may be predefined (e.g., based on the process variations specific to the corresponding RFE device). In one or more embodiments, one or more of the worst-case durations defined in the calibration timing constants may be dependent on the configuration of the RFE circuitry.

In one or more embodiments, the conditional calibration sequences 406 may define various calibration sequences that may be used (e.g., for configuration calibration or recalibration) given certain RFE configuration conditions (e.g., which may be defined in the configuration data 402). In one or more embodiments, the conditional calibration sequences 406 may include a list of LO signal types and frequencies to be used when performing specific calibration functions for particular components of the RFE leader and RFE followers. In one or more embodiments, the conditional calibration sequences 406 may include a list or sequence of calibration functions to be performed by one or more of the RFE leader or the RFE followers. In one or more embodiments, the RFE device may determine a conditional calibration sequence of the conditional calibration sequences 406 based on the corresponding configuration data 402. For example, one or more configuration parameters of the configuration data 402 may define specific calibration phases to be used, one or more calibration procedures to be used in a particular calibration phase, and, in some instances, one or more calibration phases to be skipped. The conditional calibration sequences 406 may be specific to the integrated circuit(s) used to implement a particular RFE leader or RFE follower.

The radar cycle schedule 410 may define timings for various phases of the radar cycle. For example, the radar cycle schedule 410 may define timings (e.g., start times, end times, or both) for powering on the RFE leader, powering on the RFE followers, recalibrating of the RFE leader, recalibrating of the RFE followers, performing chirp sequence transmission and reception, built-in self-testing, powering off the RFE leader and the RFE followers, and idling/reconfiguration. One or more of these timings may be defined relative to the time at which an initial LO signal is provided by the RFE leader to the RFE followers.

The configuration calibration schedule 412 may define a sequence of phases of a configuration calibration process (e.g., which may be performed at block 202 of the method 200 of FIG. 2), and may define timings for each phase (e.g., relative to the time at which an initial LO signal is provided by the RFE leader to the RFE followers during the RFE configuration process). For example, the configuration calibration schedule 412 may define timings (e.g., start times, end times, or both) for configuration calibration phases for the RFE leader ("RFE leader configuration calibration phases") and configuration calibration phases for the RFE followers ("RFE follower configuration calibration phases"). Each phase may include one or more calibration functions to be performed by the corresponding RFE leader or RFE followers, as defined by the configuration calibration schedule 412. In one or more embodiments, the configuration calibration schedule 412 may further include a sequence of LO signals to be generated and provided by the RFE leader to itself (e.g., via the LO signal input interface 314 of FIG. 3) and to the RFE followers at each phase of the configuration calibration process, with the configuration calibration schedule 412 defining a type, frequency, start time, and end time for each LO signal of the sequence.

The recalibration schedule 414 may define a sequence of phases of a recalibration process (e.g., which may be performed at block 204 of the method 200 of FIG. 2), and may define timings for each phase (e.g., relative to the time at which an initial LO signal is provided by the RFE leader to the RFE followers during a corresponding radar cycle). For example, the recalibration schedule 414 may define timings (e.g., start times, end times, or both) for recalibration phases for the RFE leader ("RFE leader recalibration phases") and recalibration phases for the RFE followers ("RFE follower recalibration phases"). Each phase may include one or more calibration functions to be performed by the corresponding RFE leader or RFE followers, as defined by the recalibration schedule 414. In one or more embodiments, the recalibration schedule 414 may further include a sequence of LO signals to be generated and provided by the RFE leader to itself (e.g., via the LO signal input interface 314 of FIG. 3) and to the RFE followers at each phase of the recalibration process, with the recalibration schedule 414 defining a type, frequency, start time, and end time for each LO signal of the sequence.

FIG. 5 shows a timing diagram 500 illustrating timings for an RFE leader sequence 504, an RFE follower sequence 506, and an LO detection signal chart 508 during an RFE configuration process 502. The RFE configuration process 502 may correspond to an embodiment of the block 202 of the method 200 of FIG. 2, as a non-limiting example. The RFE leader sequence 504 includes a sequence of subprocesses that may be performed by an RFE leader (e.g., the RFE leader 102 of FIG. 1; the RFE leader 302 of FIG. 3) of a radar system as part of the RFE configuration process 502. The RFE follower sequence 506 includes a sequence of subprocesses that may be performed by one or more RFE followers (e.g., the RFE followers 103 of FIG. 1; the RFE follower 320 of FIG. 3) of the radar system as part of the RFE configuration process 502. The RFE leader sequence 504 and the RFE follower sequence 506 may be performed in parallel. Timings for a leader configuration calibration process 514 of the RFE leader sequence 504 and a follower configuration calibration process 524 of the RFE follower sequence 506 may be defined relative to a time T0 corresponding to the time at which an initial LO signal is sent by the RFE leader to the RFE follower(s). The LO detection signal chart 508 may represent an output of detector circuitry (e.g., the detector circuitry 329 of FIG. 3) of an RFE follower configured to detect an LO signal received at an LO signal input interface (e.g., the LO signal input interface 328 of FIG. 3) of the RFE follower. As shown in the LO detection signal chart 508, a rising edge 530 of the LO detection signal may indicate the time T0. In one or more embodiments, the rising edge 530 may be shifted to account for transmission delay of the initial LO signal.

As shown, the RFE leader sequence 504 may include a leader configuration application process 510, a leader power on process 512, a leader configuration calibration process 514, and a leader power off process 516. The RFE follower sequence 506 may include a follower configuration application process 518, a waiting period 520, an idle period 521, a follower power on process 522, a follower configuration calibration process 524, and a follower power off process 526.

The leader configuration application process 510 may include applying a configuration to the RFE leader. For example, applying the configuration to the RFE leader may include configuring the TX/RX circuitry (e.g., the TX/RX circuitry 312 of FIG. 3), LO signal generation circuitry (e.g., the LO signal generation circuitry 308 of FIG. 3), or other applicable components of the RFE leader based, at least in part, on configuration data (e.g., the configuration data 402 of FIG. 4) stored in a memory of the RFE leader (e.g., the memory 317 of FIG. 3)where the configuration data includes configuration parameters for implementing a particular radar use case. For example, such configuration parameters may define aspects of the radar cycle, the chirp sequence (e.g., chirp count, sequence length, or filtering parameters, as non-limiting examples), or chirp profiles (e.g., dwell time, settle time, acquisition time, chirp interval time, effective sampling frequency, chirp slope direction, center frequency, chirp bandwidth, transmit power, phase rotation parameters, receive gain, or cutoff frequencies, as non-limiting examples).

The follower configuration application process 518 may include applying a configuration to the one or more RFE followers. For example, applying the configuration to the RFE follower(s) may include configuring the TX/RX circuitry (e.g., the TX/RX circuitry 326 of FIG. 3) or other applicable components of the RFE follower(s) based, at least in part, on configuration data (e.g., the configuration data 402 of FIG. 4) stored in a memory of each RFE follower (e.g., the memory 331 of FIG. 3), where the configuration data includes configuration parameters for implementing a particular radar use case. For example, such configuration parameters may define aspects of the radar cycle, the chirp sequence (e.g., chirp count, sequence length, or filtering parameters, as non-limiting examples), or chirp profiles (e.g., dwell time, settle time, acquisition time, chirp interval time, effective sampling frequency, chirp slope direction, center frequency, chirp bandwidth, transmit power, phase rotation parameters, receive gain, or cutoff frequencies, as non-limiting examples).

The leader power on process 512 may include ramping up one or more supply voltages provided to or generated by the RFE leader, powering up hardware components in a particular sequence, waiting for one or more clock signals to stabilize, as non-limiting examples. During the waiting period 520, the RFE follower may wait to receive an initial LO signal from the RFE leader before starting the follower power on process 522. In one or more embodiments, the RFE follower may wait for an additional idle period 521 following the waiting period 520 before starting the follower power on process 522. The duration of the idle period 521 may be equal to the duration of both an expected remaining duration of the leader power on process 512 following the generation of the initial LO signal and a leader-only calibration phase (e.g., the leader-only calibration phase 0 of FIG. 6) minus the duration of the follower power on process 522, with these durations being defined by the corresponding schedule (e.g., the configuration calibration schedule 412 of FIG. 4). For example, the duration of the idle period 521 may be T1 - T0, and may be determined by calculating (T3 - T0) - (T3 - T1). The follower power on process 522 may include ramping up one or more supply voltages provided to or generated by the RFE follower, powering up hardware components in a particular sequence, and waiting for one or more clock signals to stabilize, as non-limiting examples.

The leader configuration calibration process 514 may include performing a sequence of calibration functions for particular components of the RFE leader, such as TX/RX circuitry and LO signal generation circuitry of the RFE leader. For example, such calibration functions may include calibrating receiver filters, receiver gain, transmitter power, and LO signal generation circuitry output power, as non-limiting examples. The follower configuration calibration process 524 may include performing a sequence of calibration functions for particular components of the RFE follower(s), such as TX/RX circuitry of the RFE follower(s). For example, such calibration functions may include calibrating receiver filters, receiver gain, and transmitter power, as non-limiting examples.

In one or more embodiments, the RFE leader may send the initial LO signal to the RFE follower(s) at the time T0 during the leader power on process 512, where the time T0 is determined by the RFE followers based on the rising edge 530 of the LO detection signal. In response to the time T0, the RFE follower(s) may start the follower power on process 522. The time T0 further corresponds to the start of the idle period 521 for the RFE follower(s). The RFE leader and the RFE follower(s) may store (e.g., in the memory 317 and the memory 331 of FIG. 3) the time at which initial LO signal is provided by the RFE leader (i.e., T0). The leader configuration calibration process 514 may begin at time T2, after a predefined duration (i.e., an expected duration between the initial generation of the initial LO signal and the end of the leader power on process 512) following the time T0. The RFE leader and the RFE follower(s) may determine timings for phases of the leader configuration calibration process 514 and phases of the follower configuration calibration process 524 relative to the time T0 at which the initial LO signal is provided by the RFE leader. The RFE follower(s) may determine timings for the idle period 521 and the follower power on process 522 based, at least in part, on the time T0 at which the initial LO signal is transmitted. In one or more embodiments, the RFE follower(s) may determine the time T0 by subtracting an estimated transmission time of the initial LO signal from the time of the rising edge 530 of the LO detection signal at which the detector circuitry first detects the initial LO signal, which may improve synchronization accuracy between the RFE leader and the RFE follower(s).

The follower configuration calibration process 524 may start at time T3. In one or more embodiments, the duration from time T0 to time T2 may correspond to a worst-case duration for the remainder of the leader power on process 512 performed by the RFE leader, following generation of the initial LO signal. The duration from time T2 to time T3 may correspond to a worst-case duration for an initial leader-only configuration calibration phase (e.g., leader configuration calibration phase 0 of FIG. 6) performed by the RFE leader. Following this initial configuration calibration phase, remaining calibration phases of the leader configuration calibration process 514 and calibration phases of the follower configuration calibration process 524 may be synchronized based on configuration calibration schedules (e.g., the configuration calibration schedule 412 of FIG. 4) stored in respective memories of the RFE leader and the RFE follower, and defined relative to the time T0.

The leader configuration calibration process 514 and the follower configuration calibration process 524 may end at time T_END, and may be followed by the leader power off process 516 and the follower power off process 526. An example of synchronized timings for the calibration phases of the leader configuration calibration process 514 and the follower configuration calibration process 524 is provided below in connection with FIG. 6.

FIG. 6 shows a timing diagram 600 illustrating sequences of RFE leader configuration calibration phases, LO signals, and RFE follower configuration calibration phases, which may be performed during RFE leader and RFE follower configuration calibration processes of an RFE configuration process, such as the RFE configuration process 502 of FIG. 5. The timing diagram 600 is described with reference to the leader and follower configuration calibration processes 514 and 524 and times T2, T3, and T_END of FIG. 5. However, it should be understood that this is illustrative and non-limiting, at least in that the timing diagram 600 may be applied to other suitable radar configuration timing arrangements in accordance with one or more other embodiments.

The leader configuration calibration process 514 may begin at time T2 and may include a sequence of configuration calibration phases 0 through N. The RFE leader may store a configuration calibration schedule (e.g., the configuration calibration schedule 412 of FIG. 4) that defines, for each calibration phase of the leader configuration calibration process 514, a start time, an end time, and one or more calibration functions to be performed during that calibration phase. The times T2, T_END, and each calibration phase start time and end time may be defined relative to the time T0 at which an initial LO signal is sent by the RFE leader to the RFE follower(s), indicating the start of the leader configuration calibration process 514.

An LO signal sequence 602 may begin at time T2 and includes a sequence of LO signal generation periods 0 through N. The configuration calibration schedule stored at the RFE leader may define, for each LO signal generation period, a start time, an end time, and the type and frequency of the LO signal to be generated during that LO signal generation period. Each LO signal generation period start time and end time may be defined relative to the time T0.

The follower configuration calibration process 524 may begin at time T3 (following completion of calibration phase 0 of the leader configuration calibration process 514) and may include a sequence of configuration calibration phases 1 through N. Each RFE follower may store a configuration calibration schedule (e.g., the configuration calibration schedule 412 of FIG. 4) that defines, for each calibration phase of the follower configuration calibration process 524, a start time, an end time, and one or more calibration functions to be performed during that calibration phase. Each calibration phase start time and end time may be defined relative to the time T0. In the configuration calibration processes, the RFE follower(s) may require fewer calibration phases than the RFE leader, and "leader-only" calibration functions may be performed in calibration phase 0 while the power on process for the RFE follower(s) is not yet completed.

In the present example, the leader-only calibration phase 0 of the leader configuration calibration process 514 and LO signal generation period 0 of the LO signal sequence 602 may be synchronized to start at time TCS_0 and to end at time TCE_0. Calibration phases 1 through N of the leader configuration calibration process 514, calibration phases 1 through N of the follower configuration calibration process 524, and the LO signal generation periods 1 through N of the LO signal sequence 602 may each have synchronized start and end times (e.g., start time TCS_1 and end time TCE_1 for each calibration phase 1 and period 1, start time TCS_2 and end time TCE_2 for each calibration phase 2 and period 2, ..., start time TCS_N and end time TCE_N for each calibration phase N and period N).

A buffer period may be included at the start and end of each calibration phase and LO signal generation period. Such buffer periods may compensate for timing synchronization accuracies between the RFE leader and the RFE follower. In the present example, such buffer periods include time T2 to time TCS_0, time TCE_0 to time TCS_1, time TCE_1 to time TCS_2, and time TCE_N to time T_END.

FIG. 7 shows an illustrative process flow for a method 700 by which RFE circuitry of a radar system (e.g., the RFE leader 102 and RFE followers 103 of FIG. 1; the RFE circuitry 300 of FIG. 3) may initiate and perform a configuration calibration process. In one or more embodiments, the method 700 may be performed as part of an initial configuration process for a the RFE circuitry of radar system, such as the initial configuration process of block 202 of the method 200 of FIG. 2. The method 700 is described here with reference to elements of the RFE circuitry 300 of FIG. 3, the timing diagram 500 of FIG. 5, and the timing diagram 600 of FIG. 6. However, it should be understood that this is illustrative and non-limiting, at least in that other suitable radar systems, RFE circuitry, and timing arrangements may be used to carry out the method 700 in one or more other embodiments. The method 700 may begin after applying a configuration (e.g., based on the configuration data 402 of FIG. 4) to the RFE leader, which may be performed at least partially in parallel with applying configurations to the one or more RFE followers.

At block 702, an RFE leader starts a leader power on process. For example, the RFE leader 302 may initiate the leader power on process 512.

At block 704, at time T0, during the leader power on process, the RFE leader generates an initial LO signal and provides the initial LO signal to one or more RFE followers. The RFE leader may also send the initial LO signal to an LO signal input interface of the RFE leader. For example, at time T0, the RFE leader 302 may provide the initial LO signal to the RFE follower 320 and to the LO signal input interface 314.

At block 706, from time T1 to time T3, after an idle period (e.g., from time T0 to time T1) in response to detecting the initial LO signal provided by the RFE leader, detector circuitry of each of the one or more RFE followers asserts a respective LO detection signal, in response to which each RFE follower performs a respective follower power on process. For example, the detector circuitry 329 of the RFE follower 320 may assert an LO detection signal with a rising edge 530 in response to detecting the initial LO signal provided by the RFE leader 302, in response to which the RFE follower may performs the follower power on process 522 between time T1 and time T3, after waiting for the duration of the idle period 521 from time T0 to time T1.

At block 708, from time T2 to time T3, the RFE leader performs a leader configuration calibration process, following the leader power on process. For example, the RFE leader 302 may start the leader configuration calibration process 514 at time T2 based on the elapsed time since T0. For example, between time T2 and time T3 (e.g., starting at time TCS_0 and ending at time TCE_0), the RFE leader 302 may perform calibration phase 0 (i.e., an initial calibration phase) of the leader configuration calibration process 514 and, concurrently, generate the LO signal associated with the LO signal generation period 0 of the LO signal sequence 602.

At block 710, from time T3 to time T_END, the RFE leader and RFE follower(s) perform calibration phases 1 through N, where N is the total number of synchronized calibration phases (i.e., omitting calibration phase 0, which is leader-only) to be performed, based on one or more stored configuration calibration schedules, where timings for each calibration phase are defined relative to the time T0. Defining calibration timings for the RFE leader and RFE follower relative to T0 in this way provides for synchronization of the calibration phases.

For example, starting at time T3, the RFE leader 302 may perform, in sequence, calibration phases 1 through N of the leader configuration calibration process 514 and may generate, in sequence, the LO signals corresponding to periods 1 through N, and the RFE follower 320 may perform, in sequence, calibration phases 1 through N of the follower configuration calibration process 524. The LO signals generated by the RFE leader 302 may be provided to the RFE follower 320 for use in the associated calibration phase of the follower configuration calibration process 524. Start and end times of each calibration phase and LO signal generation period may be synchronized based on configuration calibration schedules stored at the RFE leader 302 and the RFE follower 320. For example, such a configuration calibration schedule may define the times TCS_0, TCE_0, TCS_1, TCE_1, TCS_2, TCE_2, ... TCS_N, TCE_N, corresponding to start and end times of each calibration phase and LO signal generation period, and each time may be defined relative to the time T0 at which the RFE leader 302 sent the initial LO signal (e.g., determined by the RFE follower 320 based on the rising edge 530 of the LO detection signal).

Following block 708, the RFE leader and RFE follower(s) may perform respective leader and follower power off processes (e.g., the leader power off process 516 and the follower power off process 526) to end the RFE configuration process.

FIG. 8 shows a timing diagram 800 illustrating timings for an RFE leader sequence 804, an RFE follower sequence 806, an LO detection signal chart 808, and an IO signal chart 809 during a radar cycle 802. The radar cycle 802 may correspond to an embodiment of the blocks 204, 206, 208, and 210 of the method 200 of FIG. 2, as a non-limiting example. The RFE leader sequence 804 includes a sequence of subprocesses that may be performed by an RFE leader (e.g., the RFE leader 102 of FIG. 1; the RFE leader 302 of FIG. 3) of a radar system as part of the radar cycle 802. The RFE follower sequence 806 includes a sequence of subprocesses that may be performed by one or more RFE followers (e.g., the RFE followers 103 of FIG. 1; the RFE follower 320 of FIG. 3) of the radar system as part of the radar cycle 802. The RFE leader sequence 804 and the RFE follower sequence 806 may be performed in parallel. Timings for a leader recalibration process 812 of the RFE leader sequence 804 and a follower recalibration process 824 of the RFE follower sequence 806 may be defined relative to a time T0 corresponding to the time at which an initial LO signal is sent by the RFE leader to the RFE follower(s) during the leader power on process 810. The LO detection signal chart 808 may represent an output of detector circuitry (e.g., the detector circuitry 329 of FIG. 3) of an RFE follower configured to detect an LO signal received at an LO signal input interface (e.g., the LO signal input interface 328 of FIG. 3) of the RFE follower. As shown in the LO detection signal chart 808, a rising edge 834 of the LO detection signal may indicate the time T0. In one or more embodiments, the rising edge 834 may be shifted to account for transmission delay of the initial LO signal. The IO signal chart 809 may represent the voltage level at an IO interface (e.g., the IO interface 306 of FIG. 3) of the RFE leader over time, including an IO pulse 836 sent at time T_RADAR.

As shown, the RFE leader sequence 804 may include a leader power on process 810, a leader recalibration process 812, a radar signal transmission/reception (TX/RX) process 814, a leader BIST process 816, a leader power off process 818, and an idle/reconfiguration period 820. The RFE follower sequence 806 may include a follower power on process 822, a leader recalibration process 824, a radar signal transmission/reception (TX/RX) process 826, a follower BIST process 828, a follower power off process 830, and an idle/reconfiguration period 832.

In one or more embodiments, the radar cycle 802 may begin with the leader power on process 810. During the leader power on process 810, the RFE leader may generate and provide an initial LO signal to the RFE follower(s)at time T0. It should be understood that times T0, T1, T2, T3, and T_END of the present example are not the same as the times T0, T1, T2, T3, and T_END of the examples of FIGS. 5-7. The RFE leader and the RFE follower(s) may store (e.g., in the memory 317 and the memory 331 of FIG. 3) the time at which the initial LO signal is provided by the RFE leader (i.e., T0). The RFE leader and the RFE follower(s) may determine timings for phases of the leader recalibration process 812 and phases of the follower recalibration process 824 relative to the time T0 at which the initial LO signal is initially provided by the RFE leader. In one or more embodiments, the RFE follower(s) may determine the time T0 by subtracting an estimated transmission time of the initial LO signal from the time of the rising edge 834 of the LO detection signal at which the detector circuitry first detects the initial LO signal, which may improve synchronization accuracy between the RFE leader and the RFE follower(s).

The leader power on process 810 may start prior to time T0 and may include ramping up one or more supply voltages provided to or generated by the RFE leader, powering up hardware components in a particular sequence, waiting for one or more clock signals to stabilize, as non-limiting examples. The follower power on process 822 may start at time T1, following an idle period 821. The time T1 may be defined based on the time T0 (e.g., accounting for transmission delay). For example, the duration of the idle period 821 may be T1 - T0, and may be determined by calculating (T3 - T0) - (T3 - T1). The follower power on process 822 may include ramping up one or more supply voltages provided to or generated by the RFE follower, powering up hardware components in a particular sequence, and waiting for one or more clock signals to stabilize, as non-limiting examples.

The leader recalibration process 812 may start at time T2 and may include performing a sequence of calibration functions for particular components of the RFE leader, such as TX/RX circuitry and LO signal generation circuitry of the RFE leader. For example, such calibration functions may include calibrating receiver filters, receiver gain, transmitter power, and LO signal generation circuitry output power, as non-limiting examples. The follower recalibration process 824 may start at time T3. In one or more embodiments, the duration from time T0 to time T2 may correspond to a worst-case duration for the remainder of the leader power on process 810 performed by the RFE leader, following generation of the initial LO signal. The follower recalibration process 824 may include performing a sequence of calibration functions for particular components of the RFE follower(s), such as TX/RX circuitry of the RFE follower(s). For example, such calibration functions may include calibrating receiver filters, receiver gain, and transmitter power, as non-limiting examples.

In one or more embodiments, the duration from time T2 to time T3 may correspond to a worst-case duration for an initial recalibration phase (e.g., leader recalibration phase 0 of FIG. 9) performed by the RFE leader. Following this initial recalibration phase, remaining calibration phases of the leader recalibration process 812 and calibration phases of the follower recalibration process 824 may be synchronized based on recalibration schedules (e.g., the recalibration schedule 414 of FIG. 4) stored in respective memories of the RFE leader and the RFE follower and may be defined relative to the time T0. An example of synchronized timings for the calibration phases of the leader recalibration process 812 and the follower recalibration process 824 is provided below in connection with FIG. 9.

The leader recalibration process 812 and the follower recalibration process 824 may end at time T_RADAR, at which time the leader radar signal TX/RX process 814 and the follower radar signal TX/RX process 826 may begin. In one or more embodiments, the RFE leader may send an IO pulse 836 to the RFE follower(s) via an IO interface (e.g., the IO interface 306) to trigger the start of the radar signal TX/RX process 826. The time T _RADAR at which the leader radar signal TX/RX process 814 and the follower radar signal TX/RX process 826 begin may be defined relative based on the transmission time of the IO pulse 836 in conjunction with a radar cycle schedule (e.g., the radar cycle schedule 410 of FIG. 4) that is stored at the RFE leader and RFE follower(s), such that the performance of these processes by the RFE leader and the RFE follower(s) is synchronized. In one or more other embodiments, the radar signal TX/RX processes 814 and 826 may be triggered based on the timing of the initial LO signal, rather than an IO signal. The leader radar signal TX/RX process 814 and the follower radar signal TX/RX process 826 may include transmitting radar signals (e.g., respective chirp sequences) and receiving corresponding reflections by the RFE leader and RFE follower(s) respectively. In one or more embodiments, the leader radar signal TX/RX process 814 and the follower radar signal TX/RX process 826 may correspond to the block 206 of the method 200 of FIG. 2.

At time T_BIST, following the leader recalibration process 812 and the follower recalibration process 824, the RFE leader and the RFE follower(s) may begin the leader BIST process 816 and the follower BIST process 828, respectively. The time T_BIST at which the leader BIST process 816 and the follower BIST process 828 begin may be defined relative to the time T0 in a radar cycle schedule (e.g., the radar cycle schedule 410 of FIG. 4) that is stored at the RFE leader and RFE follower(s), such that the performance of these BIST processes by the RFE leader and the RFE follower(s) is synchronized. The leader BIST process 816 and the follower BIST process 828 may include one or more tests that determine whether certain components or subsystems of the RFE leader and the RFE follower, respectively, are properly functional. In one or more embodiments, one or more phases of the leader and follower BIST processes 816 and 828 may be synchronized relative to the time T0 (the time at which the initial LO signal is provided by the RFE leader). In one or more embodiments, one or more phases of the leader and follower BIST processes 816 and 828 may utilize one or more LO signals generated by the RFE leader, and the generation of such LO signals may be synchronized with performance of the corresponding BIST phases relative to the time T0. In one or more embodiments, the leader BIST process 816 and the follower BIST process 828 may correspond to the block 208 of the method 200 of FIG. 2.

At time T_END, following the leader BIST process 816 and the follower BIST process 828, the RFE leader may begin the leader power off process 818, and the RFE follower may begin the leader power off process 830. After the RFE leader and RFE follower are powered off, the RFE leader to the RFE follower(s) may be reconfigured or may remain idle for a predefined duration during the idle/reconfiguration periods 820 and 832 (e.g., which may correspond to the block 210 of the method 200 of FIG. 2).

FIG. 9 shows a timing diagram 900 illustrating sequences of RFE leader recalibration phases, LO signals, and RFE follower recalibration phases, which may be performed during RFE leader and RFE follower recalibration processes of a radar cycle, such as the radar cycle 802 of FIG. 8. The timing diagram 900 is described with reference to the leader and follower recalibration processes 812 and 824 and times T2, T3, and T_RADAR of FIG. 8. However, it should be understood that this is illustrative and non-limiting, at least in that the timing diagram 900 may be applied to other suitable radar cycle timing arrangements in accordance with one or more other embodiments.

The leader recalibration process 812 may begin at time T2 and may include a sequence of recalibration phases 0 through N. The RFE leader may store a recalibration schedule (e.g., the recalibration schedule 414 of FIG. 4) that defines, for each recalibration phase of the leader recalibration process 812, a start time, an end time, and one or more calibration functions to be performed during that recalibration phase. Each recalibration phase start time and end time may be defined relative to the time T0 at which an initial LO signal is sent by the RFE leader to the RFE follower(s).

An LO signal sequence 902 may begin at time T2 and includes a sequence of LO signal generation periods 0 through N. The recalibration schedule stored at the RFE leader may define, for each LO signal generation period, a start time, an end time, and the type and frequency of the LO signal to be generated during that LO signal generation period. Each LO signal generation period start time and end time may be defined relative to the time T0.

The follower recalibration process 824 may begin at time T3 (following completion of recalibration phase 0 of the leader recalibration process 812) and may include a sequence of recalibration phases 1 through N. Each RFE follower may store a recalibration schedule (e.g., the recalibration schedule 414 of FIG. 4) that defines, for each recalibration phase of the follower recalibration process 824, a start time, an end time, and one or more calibration functions to be performed during that recalibration phase. Each recalibration phase start time and end time may be defined relative to the time T0. In the recalibration processes, the RFE follower(s) may require fewer recalibration phases than the RFE leader, and "leader-only" calibration functions may be performed in recalibration phase 0 while the power on process for the RFE follower(s) is not yet completed.

In the present example, recalibration phase 0 of the leader recalibration process 812 and LO signal generation period 0 of the LO signal sequence 902 may be synchronized to start at time TRS_0 and to end at time TRE_0. Recalibration phases 1 through N of the leader recalibration process 812, recalibration phases 1 through N of the follower recalibration process 824, and the LO signal generation periods 1 through N of the LO signal sequence 902 may each have synchronized start and end times (e.g., start time TRS_1 and end time TRE_1 for each recalibration phase 1 and period 1, start time TRS_2 and end time TRE_2 for each recalibration phase 2 and period 2, ..., start time TRS_N and end time TRE_N for each recalibration phase N and period N).

A buffer period may be included at the start and end of each recalibration phase and LO signal generation period. Such buffer periods may compensate for timing synchronization accuracies between the RFE leader and the RFE follower. In the present example, such buffer periods include time T2 to time TRS_0, time TRE_0 to time TRS_1, time TRE_1 to time TRS_2, and time TRE_N to time T _RADAR.

FIG. 10 shows an illustrative process flow for a method 1000 by which RFE circuitry of a radar system (e.g., the RFE leader 102 and RFE followers 103 of FIG. 1; the RFE circuitry 300 of FIG. 3) may initiate and perform a recalibration process. In one or more embodiments, the method 1000 may be performed once per radar cycle as part of a recalibration process for a the RFE circuitry of radar system, such as the recalibration process of block 204 of the method 200 of FIG. 2. The method 1000 is described here with reference to elements of the RFE circuitry 300 of FIG. 3, the timing diagram 800 of FIG. 8, and the timing diagram 900 of FIG. 9. However, it should be understood that this is illustrative and non-limiting, at least in that other suitable radar systems, RFE circuitry, and timing arrangements may be used to carry out the method 1000 in one or more other embodiments. The method 1000 may begin at the start of a radar cycle, such as the radar cycle 802.

At block 1002, an RFE leader starts a leader power on process. For example, the RFE leader 302 may initiate the leader power on process 810.

At block 1004, at time T0, during the leader power on process, the RFE leader generates an initial LO signal and provides the initial LO signal to one or more RFE followers. For example, at time T0, the RFE leader 302 may provide the initial LO signal to the RFE follower 320.

At block 1006, from time T1 to time T3, after an idle period (e.g., from time T0 to time T1) in response to detecting the initial LO signal provided by the RFE leader, detector circuitry of each of the one or more RFE followers asserts a respective LO detection signal, in response to which each RFE follower performs a respective follower power on process. For example, the detector circuitry 329 of the RFE follower 320 may assert an LO detection signal with a rising edge 834 in response to detecting the initial LO signal provided by the RFE leader 302, in response to which the RFE follower may perform follower power on process 822 between time T1 and time T3, after waiting for the duration of the idle period 821 from time T0 to time T1.

At block 1008, from time T2 to time T3, the RFE leader performs the leader power on process that was initiated at block 1002, following the leader power on process. For example, between time T2 and time T3 (e.g., starting at time TRS_0 and ending at time TRE_0), the RFE leader 302 may perform recalibration phase 0 (e.g., an initial calibration phase) of the leader recalibration process 812 and, concurrently, generate the LO signal associated with LO signal generation period 0 of the LO signal sequence 902.

It should be understood that the block 1006 may be performed by the RFE follower(s) at least partly parallel with performance of the block 1008 by the RFE leader.

At block 1010, from time T3 to time T_RADAR, the RFE leader and RFE follower(s) perform recalibration phases 1 through N, where N is the total number of synchronized recalibration phases (i.e., omitting recalibration phase 0, which is leader-only) to be performed, based on one or more stored recalibration schedules, where timings for each recalibration phase are defined relative to the time T0. Defining calibration timings for the RFE leader and RFE follower relative to T0 in this way provides for synchronization of the recalibration phases.

For example, starting at time T3, the RFE leader 302 may perform, in sequence, recalibration phases 1 through N of the leader recalibration process 812 and may generate, in sequence, the LO signals corresponding to periods 1 through N, and the RFE follower 320 may perform, in sequence, recalibration phases 1 through N of the follower recalibration process 824. The LO signals generated by the RFE leader 302 during each period may be provided to the RFE follower 320 for use in the associated recalibration phase of the follower recalibration process 824. Start and end times of each recalibration phase and LO signal generation period may be synchronized based on recalibration schedules stored at the RFE leader 302 and the RFE follower 320. For example, such a recalibration schedule may define the times TRS_0, TRE_0, TRS_1, TRE_1, TRS_2, TRE_2, ..., TRS N, and TRE N, corresponding to start and end times of each recalibration phase and LO signal generation period, and each time may be defined relative to the time T0 at which the RFE leader 302 sent the initial LO signal (e.g., determined by the RFE follower 320 based on the rising edge 834 of the LO detection signal).

Following block 1008, the RFE leader and RFE follower(s) may perform respective radar signal TX/RX processes (e.g., the leader radar signal TX/RX process 814 and the follower radar signal TX/RX process 826), BIST processes (e.g., the leader BIST process 816 and the follower BIST process 828), and power off processes (e.g., the leader power off process 818 and the follower power off process 830).

Various exemplary embodiments are presented below. Some simplifications and omissions may be made in the following examples, which are intended to highlight and introduce some aspects of the various exemplary embodiments, without limiting the scope.

In an example embodiment, a radar system includes radar front-end circuitry including a leader device and a follower device. The leader device includes a first local oscillator (LO) interface, first transmit/receive (TX/RX) circuitry including a first plurality of transmit modules and a first plurality of receive modules, a first computer-readable memory configured to store a first calibration schedule, and first processing circuitry configured to output, at a first time, an initial LO signal via the first LO interface, and perform a first calibration process, including calibration of the first TX/RX circuitry, based on the first calibration schedule and based on the first time at which the initial LO signal is output. The follower device includes a second LO interface connected to the first LO interface, where the follower device receives the initial LO signal from the first LO interface of the leader device via the second LO interface, second TX/RX circuitry including a second plurality of transmit modules and a second plurality of receive modules, a second computer-readable memory configured to store a second calibration schedule, and second processing circuitry configured to determine the first time at which the initial LO signal is output by the leader device, and perform a second calibration process, including calibration of the second TX/RX circuitry, based on the second calibration schedule and based on the first time at which the initial LO signal is output by the leader device.

In one or more embodiments, the first calibration process performed by the leader device includes an initial calibration phase and a first LO signal generation period, where the initial calibration phase and the first LO signal generation period are concurrent.

In one or more embodiments, the follower device is configured to perform a power on process concurrently, at least in part, with the initial calibration phase of the leader device.

In one or more embodiments, the first calibration process includes a first plurality of calibration phases, the second calibration process includes a second plurality of calibration phases, and timings of the second plurality of calibration phases and at least a portion of the first plurality of calibration phases are synchronized based on the first time at which the initial LO signal is output by the leader device.

In one or more embodiments, the first calibration process and the second calibration process are configuration calibration processes that are each performed during an initial configuration process of the radar system.

In one or more embodiments, where the first calibration process and the second calibration process are recalibration processes that are each performed during a radar cycle of the radar system.

In one or more embodiments, where the second processing circuitry is further configured to determine the first time at which the initial LO signal is output by the leader device by subtracting an estimated transmission time of the initial LO signal from a second time at which the follower device detects the initial LO signal.

In an example embodiment, a method includes providing, by a leader device of radar front-end circuitry of a radar system at a first time, an initial LO signal via a first local oscillator (LO) interface, receiving, by a follower device of the radar front-end circuitry, the initial LO signal from the leader device via a second LO interface, performing, by the leader device, a first calibration process based on a first calibration schedule stored at a first memory device of the leader device and further based on the first time at which the initial LO signal is provided by the leader device, and performing, by the follower device, a second calibration process based on a second calibration schedule stored at a second memory device of the follower device and further based on the first time at which the initial LO signal is provided by the leader device.

In one or more embodiments, the method includes performing the first calibration process includes performing, by the leader device, calibration functions of an initial calibration phase, and generating, by the leader device, a first LO signal during a first LO signal generation period, where the initial calibration phase and the first LO signal generation period are synchronized based on the first time.

In one or more embodiments, the method includes performing, by the follower device, a power on process concurrently with the initial calibration phase and the first LO signal generation period.

In one or more embodiments, the first calibration process includes a first plurality of calibration phases, the second calibration process includes a second plurality of calibration phases, and timings of the second plurality of calibration phases and at least a portion of the first plurality of calibration phases are synchronized based on the first time at which the initial LO signal is provided by the leader device.

In one or more embodiments, the first calibration process and the second calibration process are configuration calibration processes that are each performed during an initial configuration process of the radar system.

In one or more embodiments, the first calibration process and the second calibration process are recalibration processes that are each performed during a radar cycle of the radar system.

In one or more embodiments, the method includes determining, by the follower device, the first time at which the initial LO signal is provided by the leader device by subtracting an estimated transmission time of the initial LO signal from a second time at which the follower device detects the initial LO signal.

In an example embodiment, a radar system includes radar front-end circuitry including a leader device and a follower device. The leader device includes a first local oscillator (LO) interface, first transmit/receive (TX/RX) circuitry including a first plurality of transmit modules and a first plurality of receive modules, a first computer-readable memory configured to store a first calibration schedule and a second calibration schedule, and first processing circuitry configured to output, at a first time, a first LO signal via the first LO interface, perform a first calibration process during an initial configuration process of the radar front-end circuitry based on the first calibration schedule and based on the first time, output, at a second time, a second LO signal via the first LO interface, and perform a second calibration process during a radar cycle of the radar front-end circuitry based on the second calibration schedule and the second time. The follower device includes a second LO interface connected to the first LO interface, where the follower device receives the first LO signal and the second LO signal from the first LO interface of the leader device, second TX/RX circuitry including a second plurality of transmit modules and a second plurality of receive modules, a second computer-readable memory configured to store a third calibration schedule and a fourth calibration schedule, and second processing circuitry configured to determine the first time at which the first LO signal is initially output by the leader device, perform a third calibration process during the initial configuration process based on the third calibration schedule and based on the first time at which the first LO signal is output by the leader device, determine the second time at which the second LO signal is initially output by the leader device, and perform a fourth calibration process during the radar cycle based on the fourth calibration schedule and based on the second time at which the second LO signal is output by the leader device.

In one or more embodiments, the first calibration process includes a first plurality of calibration phases, the second calibration process includes a second plurality of calibration phases, the third calibration process includes a third plurality of calibration phases, and the fourth calibration process includes a fourth plurality of calibration phases, where at least a portion of the first plurality of calibration phases and the third plurality of calibration phases are synchronized based on the first time, and where at least a portion of the second plurality of calibration phases and the fourth plurality of calibration phases are synchronized based on the second time.

In one or more embodiments, a first initial calibration phase of the first plurality of calibration phases is performed by the leader device before the follower device starts the third calibration process, and a second initial calibration phases of the second plurality of calibration phases is performed by the leader device before the follower device starts the fourth calibration process.

In one or more embodiments, the first processing circuitry is further configured to generate a plurality of LO signals in first and second pluralities of LO signal generation periods based on the first and second calibration schedules, respectively, where each of the first plurality of LO signal generation periods is synchronized with the first plurality of calibration phases of the first calibration process, and where each of the second plurality of LO signal generation periods is synchronized with the second plurality of calibration phases of the second calibration process.

In one or more embodiments, the second processing circuitry is further configured to determine the first time at which the first LO signal is output by the leader device by subtracting an estimated transmission time from a third time at which the follower device detects the first LO signal, and determine the second time at which the second LO signal is output by the leader device by subtracting the estimated transmission time from a fourth time at which the follower device detects the second LO signal.

In one or more embodiments, the first calibration process and the third calibration process are configuration calibration processes that are each performed during the initial configuration process of the radar system, and the second calibration process and the fourth calibration process are recalibration processes that are each performed during a recalibration phase the radar cycle of the radar system.

Although the operations of the method(s) herein are shown and described in a particular order, the order of the operations of each method may be altered so that certain operations may be performed in an inverse order or so that certain operations may be performed, at least in part, concurrently with other operations. In one or more other embodiments, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limited to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

While at least one exemplary embodiment has been presented in the foregoing detailed description, it should be appreciated that a vast number of variations exist. It should also be appreciated that exemplary embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A radar system comprising:
radar front-end circuitry comprising:
a leader device comprising:
a first local oscillator, LO, interface;
first transmit/receive, TX/RX, circuitry comprising a first plurality of transmit modules and a first plurality of receive modules;
a first computer-readable memory configured to store a first calibration schedule; and
first processing circuitry configured to:
output, at a first time, an initial LO signal via the first LO interface; and
perform a first calibration process, including calibration of the first TX/RX circuitry, based on the first calibration schedule and based on the first time at which the initial LO signal is output; and
a follower device comprising:
a second LO interface connected to the first LO interface, wherein the follower device receives the initial LO signal from the first LO interface of the leader device via the second LO interface;
second TX/RX circuitry comprising a second plurality of transmit modules and a second plurality of receive modules;
a second computer-readable memory configured to store a second calibration schedule; and
second processing circuitry configured to:
determine the first time at which the initial LO signal is output by the leader device; and
perform a second calibration process, including calibration of the second TX/RX circuitry, based on the second calibration schedule and based on the first time at which the initial LO signal is output by the leader device.

2. The radar system of claim 1, wherein the first calibration process performed by the leader device includes an initial calibration phase and a first LO signal generation period, wherein the initial calibration phase and the first LO signal generation period are concurrent.

3. The radar system of claim 2, wherein the follower device is configured to perform a power on process concurrently, at least in part, with the initial calibration phase of the leader device.

4. The radar system of any of the preceding claims, wherein, the first calibration process includes a first plurality of calibration phases, the second calibration process includes a second plurality of calibration phases, and timings of the second plurality of calibration phases and at least a portion of the first plurality of calibration phases are synchronized based on the first time at which the initial LO signal is output by the leader device.

5. The radar system of any of the preceding claims, wherein the first calibration process and the second calibration process are configuration calibration processes that are each performed during an initial configuration process of the radar system.

6. The radar system of any of claims 1 to 4, wherein the first calibration process and the second calibration process are recalibration processes that are each performed during a radar cycle of the radar system.

7. The radar system of claim any of the preceding claims, wherein the second processing circuitry is further configured to determine the first time at which the initial LO signal is output by the leader device by subtracting an estimated transmission time of the initial LO signal from a second time at which the follower device detects the initial LO signal.

8. A method comprising:
providing, by a leader device of radar front-end circuitry of a radar system at a first time, an initial local oscillator, LO, signal via a first LO interface;
receiving, by a follower device of the radar front-end circuitry, the initial LO signal from the leader device via a second LO interface;
performing, by the leader device, a first calibration process based on a first calibration schedule stored at a first memory device of the leader device and further based on the first time at which the initial LO signal is provided by the leader device; and
performing, by the follower device, a second calibration process based on a second calibration schedule stored at a second memory device of the follower device and further based on the first time at which the initial LO signal is provided by the leader device.

9. The method of claim 8, wherein performing the first calibration process comprises:
performing, by the leader device, calibration functions of an initial calibration phase; and
generating, by the leader device, a first LO signal during a first LO signal generation period, wherein the initial calibration phase and the first LO signal generation period are synchronized based on the first time.

10. The method of claim 9, further comprising:
performing, by the follower device, a power on process concurrently with the initial calibration phase and the first LO signal generation period.

11. The method of any of claims 8 to 10, wherein, the first calibration process includes a first plurality of calibration phases, the second calibration process includes a second plurality of calibration phases, and timings of the second plurality of calibration phases and at least a portion of the first plurality of calibration phases are synchronized based on the first time at which the initial LO signal is provided by the leader device.

12. The method of any of claims 8 to 11, wherein the first calibration process and the second calibration process are configuration calibration processes that are each performed during an initial configuration process of the radar system.

13. The method of any of claims 8 to 11, wherein the first calibration process and the second calibration process are recalibration processes that are each performed during a radar cycle of the radar system.

14. The method of any of claims 8 to 13, further comprising:
determining, by the follower device, the first time at which the initial LO signal is provided by the leader device by subtracting an estimated transmission time of the initial LO signal from a second time at which the follower device detects the initial LO signal.
